# EUROPÄISCHE PATENTANMELDUNG

(11) **EP 1 705 592 A2**
(43) Veröffentlichungstag der Anmeldung: **27.09.2006**
(21) Anmeldenummer: 06001160.8
(22) Anmeldetag: 19.01.2006
(51) Int. Cl.: G06F 21/00

(54) **Verfahren und Steuervorrichtung zur Steuerung eines Zugriffs eines Computers auf Nutzdaten**

(30) Priorität: 24.03.2005 DE 102005014352
(71) Anmelder: Utimaco Safeware AG, 61440 Oberursel (DE)
(72) Erfinder: Morawetz, Peter, 63796 Kahl (DE); Madsen, Karsten, 6823 Ansager (DK)
(74) Vertreter: Bauer, Dirk

(57) **Zusammenfassung**

Offenbart ist zunächst ein Verfahren zur Steuerung eines Zugriffs eines Computers auf Nutzdaten, die in einer Speichervorrichtung gespeichert sind, wobei der Computer zunächst mittels eines BIOS Strukturdaten der Speichervorrichtung anfordert und anhand der Strukturdaten auf die Nutzdaten zugreift und wobei die Strukturdaten erst nach einer Authentisierung eines Nutzers an das BIOS übermittelt werden, und des Weiteren eine Steuervorrichtung zur Steuerung eines Zugriffs auf Nutzdaten, die in einer Speichervorrichtung gespeichert sind, wobei über eine Schnittstelle Strukturdaten der Speichervorrichtung von einem Controller der Speichervorrichtung anforderbar sind, anhand derer die Nutzdaten zugreifbar sind, wobei mittels der Steuervorrichtung auf eine Anforderung der Strukturdaten ein Nutzer authentifizierbar und abhängig vom Erfolg der Authentisierung die Übermittlung der Strukturdaten steuerbar ist.

Um die Handhabung gesicherter Speichervorrichtungen zu vereinfachen wird vorgeschlagen, dass im Rahmen des Verfahrens auf die Anforderung der Strukturdaten zunächst eine Authentisierungsroutine zur Authentisierung des Nutzers an das BIOS übermittelt und auf dem Computer ausgeführt wird und des Weiteren von der Steuervorrichtung auf die Anforderung der Strukturdaten zunächst eine von einem BIOS eines Computers ausführbare Authentisierungsroutine zur Authentisierung des Nutzers von der Steuervorrichtung übermittelbar ist.

## Beschreibung

Die Erfindung betrifft zunächst ein Verfahren zur Steuerung eines Zugriffs eines Computers auf Nutzdaten, die in einer Speichervorrichtung gespeichert sind, wobei der Computer zunächst mittels eines BIOS Strukturdaten der Speichervorrichtung anfordert und anhand der Strukturdaten auf die Nutzdaten zugreift und wobei die Strukturdaten erst nach einer Authentisierung eines Nutzers an das BIOS übermittelt werden, und des Weiteren eine Steuervorrichtung zur Steuerung eines Zugriffs auf Nutzdaten, die in einer Speichervorrichtung gespeichert sind, wobei über eine Schnittstelle Strukturdaten der Speichervorrichtung von einem Controller der Speichervorrichtung anforderbar sind, anhand derer die Nutzdaten zugreifbar sind, wobei mittels der Steuervorrichtung auf eine Anforderung der Strukturdaten ein Nutzer authentifizierbar und abhängig vom Erfolg der Authentisierung die Übermittlung der Strukturdaten steuerbar ist.

Im Rahmen des allgemein bekannten Bootvorgangs eines Personal Computers (PCs) ermittelt zunächst das "Basic Input-/Output System" (BIOS) die angeschlossenen Geräte und Speichervorrichtungen, insbesondere angeschlossene Festplatten. Dann fordert es über den Controller der ersten Festplatte deren so genannten "Master Boot Record" (MBR) an, beispielsweise Zylinder 0, Kopf 0, Sektor 1 (LBA 0), lädt diesen in den Speicher und führt den in diesem ab Position 0 enthaltenen ausführbaren Maschinencode, die "Master Boot Routine" aus. Diese liest zunächst die in Form der "Partitionstabelle" anschließend im MBR enthaltenen Strukturdaten der Festplatte, ermittelt die als aktiv (bootfähig) markierte primäre Partition und lädt wiederum den in deren physikalisch ersten Sektor, dem "Bootsektor" enthaltenen ausführbaren Maschinencode. Dieser auf das jeweilige Betriebssystem zugeschnittenen "Bootcode" startet mit dem Laden der Startdateien - im Falle der DOS-Betriebssysteme der Dateien msdos.sys und io.sys, im Falle von UNIX-Betriebssystemen des Kernel - das Betriebssystem.

Ein Verfahren und eine Steuervorrichtung der eingangs genannten Art ist beispielsweise bekannt unter der Bezeichnung "Secure IDE" (www.enovatech.net/products/reference/ide.htm). Die bekannte Steuervorrichtung wird in das IDE-Kabel einer zu sichernden Festplatte eingeschleift. Beim Versuch eines Zugriffs auf die angeschlossene Festplatte lädt eine in der Steuervorrichtung implementierte Logik über ein aus dem Gehäuse des PC geführtes separates Kabel die auf einem dort angeschlossenen, personalisierten Speichermodul abgelegten Authentisierungsdaten und ermittelt mit diesen einen Schlüssel für den kryptographisch verschlüsselten Zugriff auf die Festplatte.

Die Achillesferse der bekannten Steuervorrichtung ist die Authentisierung, weil der Schlüssel auf einem proprietären Token gespeichert ist, das zum Bootzeitpunkt mit der Steuervorrichtung verbunden sein muss. Jeder Nutzer, der (unbefugt) in den Besitz dieses Token gelangt, erhält Zugriff auf die Festplatte. Die Verwendung eines Hardwaretoken erschwert die Integration der bekannten Steuervorrichtung in die Festplattenelektronik. Zudem ist im Falle eines defekten oder verlorenen Token ein Ersatztoken erforderlich, um wieder Zugriff auf die Festplatte zu erhalten. Ein Zurücksetzen oder ein temporäres Freischalten der Verschlüsselung beispielsweise mittels Challenge/Response steht nicht zur Verfügung.

### Aufgabe

Der Erfindung liegt die Aufgabe zugrunde, die Handhabung gesicherter Speichervorrichtungen zu vereinfachen.

### Lösung

Ausgehend von den bekannten Verfahren wird nach der Erfindung vorgeschlagen, dass auf die Anforderung der Strukturdaten zunächst eine Authentisierungsroutine zur Authentisierung des Nutzers an das BIOS übermittelt und auf dem Computer ausgeführt wird. Das erfindungsgemäße Verfahren nutzt für die Authentisierung einerseits die am Computer schon auf der Ebene des BIOS vorhandenen Ressourcen - die Logik zum Ausführen von Programmen sowie Bildschirm und Eingabegeräte für die Kommunikation mit dem Nutzer ― und andererseits das Gedächtnis des Nutzers für die "Speicherung" der zur Authentisierung erforderlichen Daten. Es erübrigt damit sowohl die eigene Logik, als auch das separate personalisierte Speichermodul und das zu dessen Anschluss erforderliche Kabel.

Die Authentisierungsroutine gibt als Ergebnis der Authentisierung entweder unmittelbar die eingegebenen Daten oder einen hieraus ermittelten Wert zurück an die Steuervorrichtung, die davon abhängig steuert, ob im zweiten Schritt die angeforderten Strukturdaten - der MBR mit der Partitionstabelle - zurückgegeben werden, um den Bootvorgang fortzusetzen.

Bevorzugt fordert die Authentisierungsroutine im Rahmen eines erfindungsgemäßen Verfahrens Benutzername und Kennwort des Nutzers an. Die Authentisierung mittels Klarname und (kryptischem) Kennwort ermöglicht die individuell persönliche Zuordnung der Authentisierungsdaten und erleichtert so deren Verwaltung. Zudem ist diese Form der Authentisierung den Nutzern vielfach geläufig und erfordert keine Einarbeitung. Alternativ kann auch nur die Eingabe eines Kennworts über die Tastatur oder eine beliebige individuelle Aktion - beispielsweise eine individuell spezifische Folge von Mouseklicks auf einer Fläche oder eine andere Form der graphischen Authentisierung - abgefragt werden. Auch die Verwendung in Kombination mit Zweifaktor-Authertisierung beispielsweise mittels Smartcard oder mit biometrischen Daten ist möglich. Da in modernen BIOS bereits grundlegende Netzwerkfunktionen (zum Booten über ein Netzwerk) bereitgestellt werden, kann die Authentisierungsroutine zudem Authentisierungsdaten von einer Netzwerkadresse abfragen und das Lesen der Festplatte eines - gestohlenen - PC durch einen Nutzer außerhalb eines Firmennetzwerks unterbinden.

In einer besonders vorteilhaften Ausprägung des erfindungsgemäßen Verfahrens wird aus zur Authentisierung angeforderten Daten ein Schlüssel zum kryptographisch verschlüsselten Zugriff auf die Speichervorrichtung ermittelt. So kann beispielsweise aus einer vergleichsweise schwachen Kombination aus Nutzerkennung und kryptischem Kennwort mit einem in der Steuervorrichtung fest implementiertem Modul ein starker AES 128-bit-Schlüssel generiert werden, der eine unbefugte Entschlüsselung der Speichervorrichtung wirksam verhindert.

Ausgehend von den bekannten Steuervorrichtungen wird nach der Erfindung vorgeschlagen, dass auf die Anforderung der Strukturdaten zunächst eine von einem BIOS eines Computers ausführbare Authentisierungsroutine zur Authentisierung des Nutzers von der Steuervorrichtung übermittelbar ist. Eine solche erfindungsgemäße Steuervorrichtung ermöglicht die Ausführung des beschriebenen erfindungsgemäßen Verfahrens.

Besonders bevorzugt ist die erfindungsgemäße Steuervorrichtung in den Controller integriert. So kann die erfindungsgemäße Steuervorrichtung ohne zusätzliche Hardware (und damit ohne zusätzliche Herstellkosten) allein durch Neuprogrammierung (oder Austausch) der Firmware des Controllers implementiert werden. Zum Betrieb der erfindungsgemäßen Steuervorrichtung sind weder BIOS-Erweiterungen noch zusätzliche ISA- oder PCI-Steckkarten erforderlich.

Die erfindungsgemäße Steuervorrichtung ist insbesondere als Bridge in einen Bus zwischen einem Controller für den Bus und der bootbaren Speichervorrichtung einsetzbar. Besonders bevorzugt ist die Steuervorrichtung als Bridge in einen IDE-Bus einsetzbar. Aber auch das Einschleifen in ein SCSI-Kabel oder auch in einen USB- oder Firewire-Anschluss ist möglich, sofern das jeweilige BIOS ein Booten über diese Anschlüsse ermöglicht.

Vorzugsweise weist eine erfindungsgemäße Steuervorrichtung ein Kryptographiemodul auf, mittels dessen auf die Speichervorrichtung kryptographisch verschlüsselt zugreifbar ist. Die Implementation des verschlüsselten Zugriffs in einem Hardwaremodul ermöglicht eine besonders schnelle Ver- und Entschlüsselung des jeweiligen Datenstroms zur oder von der Speichervorrichtung ohne für den Nutzer spürbare Verzögerung des Zugriffs. Zudem ist der in der Steuervorrichtung abgelegte Schlüssel im Sinne eines "tamper-proof" gegen ein Ausspähen durch unberechtigte Dritte geschützt.

Eine erfindungsgemäße Steuervorrichtung kann darüber hinaus ein Schlüsselgenerierungsmodul aufweisen, mittels dessen ein Schlüssel für den Zugriff auf die Speichervorrichtung aus von der Authentisierungsroutine zur Authentisierung angeforderten Daten des Nutzers generierbar ist. Die Berechnung des Schlüssels aus den Authentisierungsdaten anstelle der Verwendung eines fest in der Steuervorrichtung abgelegten Schlüssels erhöht zusätzlich die Sicherheit gegen unbefugten Zugriff auf die Speichervorrichtung.

### Ausführungsbeispiel

Die Erfindung wird nachfolgend anhand eines Ausführungsbeispiels erläutert. Die erfindungsgemäße Steuervorrichtung wird zunächst auf einer externen Administrationsstation fertig konfiguriert, so dass auf der Zielplattform keine Zusatzsoftware erforderlich ist. Sie wird dann in den IDE-Bus der Zielplattform - eines PC - zwischen dem IDE-Controller und den zu sichernden Speichervorrichtungen eingesetzt und fungiert als Bridge. Die Initialverschlüsselung der angeschlossenen Speichervorrichtung, sowie die Ent- oder Verschlüsselung jedes Lese- oder Schreibzugriffs erfolgen im Hintergrund durch die Steuervorrichtung, ohne dass es zu spürbaren Verzögerungen beim Zugriff auf die Speichervorrichtung kommt.

Die Steuervorrichtung bietet die Funktionalität einer automatisch startenden "Pre Boot Authentication" (PBA) ohne einen Bootstrap Code auf einer angeschlossenen Festplatte oder eine ROM BIOS Erweiterung zu erfordern. Hierzu wird beim Bootvorgang die Leseanforderung der Strukturdaten des MBR von der erfindungsgemäßen Steuervorrichtung abgefangen und anstelle des MBR zunächst ein anderer Code an das BIOS zurückgeliefert, mittels dessen eine Authentisierungsroutine mit einer PBA-Maske nachgeladen wird. In dieser Maske muss sich der Nutzer durch Eingabe von Benutzername und Kennwort authentisieren. Die Authentisierungsdaten werden an die Steuervorrichtung übermittelt, diese generiert aus den Authentisierungsdaten einen kryptographischen Schlüssel und überprüft dessen Validität zur Entschlüsselung des Datenträgers. Im Erfolgsfall gibt die Authentisierungsroutine anschließend den Arbeitspeicher des PC frei und fordert den MBR erneut an. Die Steuervorrichtung liefert diesen - nach einer erfolgreichen Authentisierung ― an das BIOS zurück, so dass der Bootvorgang weiter fortfahren kann.

Gegenüber einer Software-basierten Verschlüsselung bietet die allein durch das BIOS ausgeführte PBA eine vollständige Unabhängigkeit vom Betriebssystem. Auch eine Modifikation des BIOS des Mainboards ist nicht erforderlich.

Da auf der Speichervorrichtung auch kein betriebssystemabhängiger Verschlüsselungstreiber in geschützten Dateien oder Sektoren abgelegt wird, treten keine Konflikte mit Backup-, Restore- oder Recovery-Programmen auf. Die erfindungsgemäße Steuervorrichtung beeinflusst nicht die Prozeduren des Rollout, da das Betriebssystem beispielsweise erst nach der Konfiguration der Steuervorrichtung aufgespielt wird. Alternativ kann auch ein Datenträger, der bereits unverschlüsselte Daten enthält, nachträglich durch Aktivieren der erfindungsgemäßen Steuervorrichtung verschlüsselt werden. (Analog ist auch durch Deaktivieren der Steuervorrichtung und eine Entschlüsselung des Datenträgers möglich.)

Zudem treten keine Performanceeinbußen ― zumindest nicht in spürbarem Maß ― auf. Gegenüber den bekannten Verfahren ist bei Verwendung der erfindungsgemäßen Steuervorrichtung keine zusätzliche externe, individualisierte Hardware erforderlich.

Bei Implementation der erfindungsgemäßen Steuervorrichtung in ein ATA-System treten keine Konflikte mit Hibernation auf, eine spezifische Modifikation oder Erweiterung des ATA Command Set ist nicht erforderlich. Die zusätzlichen Kosten bei der Herstellung sind vernachlässigbar, wenn die Steuervorrichtung in den Controller der Festplatte integriert wird.

## Patentansprüche

1. Verfahren zur Steuerung eines Zugriffs eines Computers auf Nutzdaten, die in einer Speichervorrichtung gespeichert sind, wobei der Computer zunächst mittels eines BIOS Strukturdaten der Speichervorrichtung anfordert und anhand der Strukturdaten auf die Nutzdaten zugreift und wobei die Strukturdaten erst nach einer Authentisierung eines Nutzers an das BIOS übermittelt werden, ***dadurch gekennzeichnet, dass*** auf die Anforderung der Strukturdaten zunächst eine Authentisierungsroutine zur Authentisierung des Nutzers an das BIOS übermittelt und auf dem Computer ausgeführt wird.

2. Verfahren nach dem vorgenannten Anspruch, ***dadurch gekennzeichnet, dass*** die Authentisierungsroutine Benutzername und Kennwort anfordert.

3. Verfahren nach einem der vorgenannten Ansprüche, ***dadurch gekennzeichnet, dass*** aus zur Authentisierung angeforderten Daten ein Schlüssel zum kryptographisch verschlüsselten Zugriff auf die Speichervorrichtung ermittelt wird.

4. Steuervorrichtung zur Steuerung eines Zugriffs auf Nutzdaten, die in einer Speichervorrichtung gespeichert sind, wobei über eine Schnittstelle Strukturdaten der Speichervorrichtung von einem Controller der Speichervorrichtung anforderbar sind, anhand derer die Nutzdaten zugreifbar sind, wobei mittels der Steuervorrichtung auf eine Anforderung der Strukturdaten ein Nutzer authentifizierbar und abhängig vom Erfolg der Authentisierung die Übermittlung der Strukturdaten steuerbar ist, ***dadurch gekennzeichnet, dass*** auf die Anforderung der Strukturdaten zunächst eine von einem BIOS eines Computers ausführbare Authentisierungsroutine zur Authentisierung des Nutzers von der Steuervorrichtung übermittelbar ist.

5. Steuervorrichtung nach dem vorgenannten Anspruch, ***dadurch gekennzeichnet, dass*** die Steuervorrichtung in den Controller integriert ist.

6. Steuervorrichtung nach einem der Ansprüche 4 oder 5, ***dadurch gekennzeichnet, dass*** die Steuervorrichtung als Bridge in einen Bus zwischen einem Controller für den Bus und der bootbaren Speichervorrichtung einsetzbar ist.

7. Steuervorrichtung nach dem vorgenannten Anspruch, ***dadurch gekennzeichnet, dass*** die Steuervorrichtung als Bridge in einen IDE-Bus einsetzbar ist.

8. Steuervorrichtung nach einem der Ansprüche 4 bis 7, ***gekennzeichnet durch*** ein Kryptographiemodul, mittels dessen auf die Speichervorrichtung kryptographisch verschlüsselt zugreifbar ist.

9. Steuervorrichtung nach dem vorgenannten Anspruch, ***gekennzeichnet durch*** ein Schlüsselgenerierungsmodul, mittels dessen ein Schlüssel für den Zugriff auf die Speichervorrichtung aus von der Authentisierungsroutine zur Authentisierung angeforderten Daten des Nutzers generierbar ist.
